# EUROPEAN PATENT SPECIFICATION

(11) **EP 3 747 253 B1**
(45) Date of publication and mention of the grant of the patent: **03.01.2024**
(21) Application number: 20178361.0
(22) Date of filing: 04.06.2020
(51) Int. Cl.: A01D 34/86, A01D 44/00, A01D 75/20, A01M 29/10, A01M 29/16

(54) **MOWING ARRANGEMENT**
MÄHANORDNUNG
SYSTEME DE TONTE

(30) Priority: 04.06.2019 NL 2023259
(43) Date of publication of application: 09.12.2020
(73) Proprietor: Alamo Group The Netherlands Middelburg B.V., 4338 PL Middelburg (NL)
(72) Inventor: TOLENAARS, Zeger Andries, 4255 KJ Nieuwendijk (NL)
(74) Representative: EP&C

(56) References cited:
- DE-B- 1 482 014
- NL-A- 9 401 826
- RU-C1- 2 023 368

## Description

### TECHNICAL FIELD

The invention relates to a mowing arrangement for mowing at least one of banks and beds of a watercourse.

### BACKGROUND

Mowing arrangements are available for mowing and/or cutting vegetation, such as grass and reed, in watercourses, such as waterways, lakes, canals, channels, rivers, streams, trenches, ditches and the like. Typically, vegetation is cut above and/or below the water surface for example for maintenance of watercourses and/or unclogging thereof to promote water flow in the watercourse.

RU2023368 discloses a mower arrangement which comprises an ultrasonic device for scaring away fish.

DE1482014 discloses a mowing arrangement for cleaning waterways.

NL9401826 discloses a mowing arrangement which is placed on a vessel.

Such mowing arrangement may comprise a mowing bucket. In general, such mowing bucket includes a meshed wall that is arranged for receiving cut vegetation and allowing water to pass through. A cutting edge is often provided on a bottom end of the mowing bucket for cutting vegetation. The cutting edge may comprise a set of a serrated stationary knife and a serrated reciprocating knife. Watercourses may be mowed from the shore by means of the mowing bucket that is coupled to a movable arm of an excavator or tractor. Additionally or alternatively, watercourses may be mowed from above the water surface, from a vessel. In the latter case, the mowing arrangement comprises a barge and one or more mowing arrangements may be coupled via a guiding arm to the vessel or be provided on an underside of a hull of the vessel.

A disadvantage of the arrangements discussed above is that their use may harm aquatic animals, such as fish, otters and other aquatic wildlife. Often, aquatic animals may e.g. be caught in the mowing bucket between the cut vegetation and dredged up out of the water and/or be harmed by the cutting edge of the mowing arrangement.

### SUMMARY

It is preferred to provide a mowing arrangement that alleviates the disadvantages at least partially, while maintaining the above-mentioned advantages. Hence, it is preferred to provide a mowing arrangement that is more animal friendly.

Thereto, the present invention provides a mowing arrangement as defined in appended claim 1.

By providing a mowing module with a cutting face having a cutting edge for cutting vegetation, a relatively simple and compact construction for mowing may be achieved. When a guiding module is arranged for guiding the mowing module in a mowing direction extending substantially parallel to the cutting face and provided under an angle relative to the cutting edge, the mowing arrangement may be guided to move along and/or through vegetation to be cut efficiently.

By providing deterring modules as defined in appended claim 1, which are arranged to emit a signal at least partially directed along the mowing direction for deterring aquatic animals, aquatic animals are driven away from the mowing arrangement and the cutting edge in particular. This prevents the animals from being hit or even cut by the cutting edge.

The mowing arrangement comprises a concave bucket having a curved wall, curved over an axis of curvature, the bucket being arranged for receiving cut vegetation, wherein the mowing module is provided at a first end of the curved wall, such that the cutting face of the mowing module extends substantially parallel to the axis of curvature, and such that the cutting edge faces outwardly from the bucket. In this implementation, the guiding module is preferably provided at a second end of the curved wall, opposite to the cutting face. Optionally, the curved wall of the concave bucket is a one dimensionally curved wall.

By providing a concave bucket having a one dimensionally curved wall, curved over an axis of curvature, the bucket being arranged for receiving cut vegetation, wherein the mowing module is provided at an end of the curved wall, such that the cutting face of the mowing module extends substantially parallel to the axis of curvature, and such that the cutting edge faces outwardly from the bucket.

In another implementation, the deterring modules are provided on the bucket, such that the signal is emitted at least partially in a direction parallel to the cutting face and under an angle relative to the cutting edge, away from the bucket.

If the deterring signal is emitted in a direction parallel to the mowing direction, animals may be continuously chased ahead of the mowing arrangement. This may fatigue the animals such that they cannot flee anymore and are in the end hit by the mowing arrangement after all. By providing the deterring signal under an angle relative to the mowing direction or a direction of movement of the mowing module relative to the water, such that the signal diverges from the mowing arrangement either in a horizontal plane, a vertical plane or both, animals are chased away out of the path of movement of the mowing arrangement or the mowing module.

A further implementation comprises a vessel configured to move the mowing arrangement through water. In this implementation, the guiding module may comprise at least one guiding arm, wherein a proximal end of the guiding arm is attached to the vessel and a distal end of the guiding arm pivotally carriers the mowing module. Such vessel is more practical for use in larger portions of water.

In yet another implementation, wherein the deterring module is provided on at least one of the mowing module and a part of the vessel that is arranged to be submerged, and wherein the emitted signal is at least partially directed in an intended direction of movement of the vessel. Regulations in some countries require mowing vessels to move downstream or from smaller portions of water to larger portions of water. By providing the signal in the moving direction, the animals are driven towards larger bodies of water, preventing trapping of animals between the vessel and a shore.

### BRIEF DESCRIPTION OF THE DRAWINGS

The invention will be further elucidated on the basis of exemplary embodiments which are represented in the drawings. The exemplary embodiments are given by way of non-limitative illustration of the invention. In the drawings:
Fig. 1 shows a schematic perspective view of a mowing arrangement according to a first aspect;
Fig. 2 shows a schematic side view of the mowing arrangement of Fig. 1; and
Fig. 3 shows a schematic front view of a mowing arrangement according to a second aspect.

It is noted that the figures are only schematic representations that are given by way of non-limited example. In the figures, the same or corresponding parts are designated with the same reference numerals.

### DETAILED DESCRIPTION

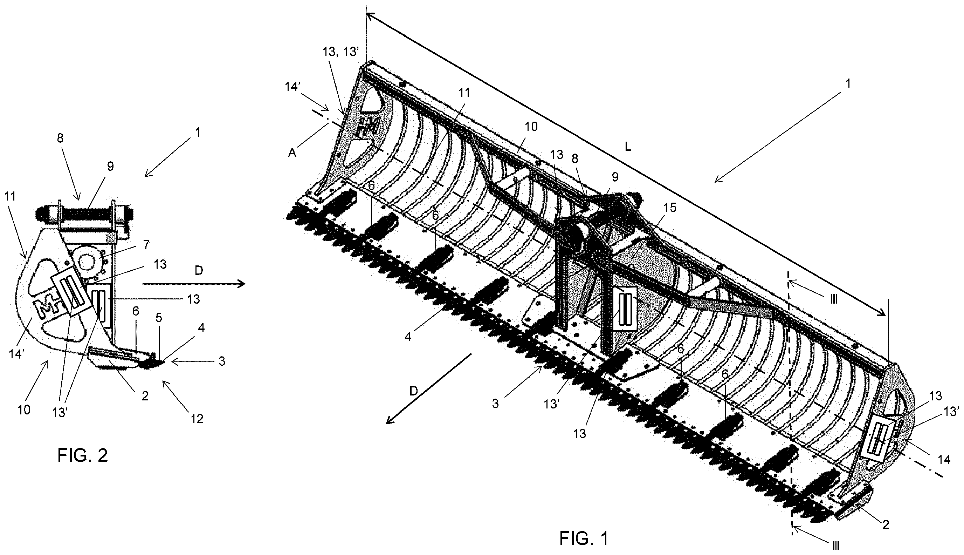

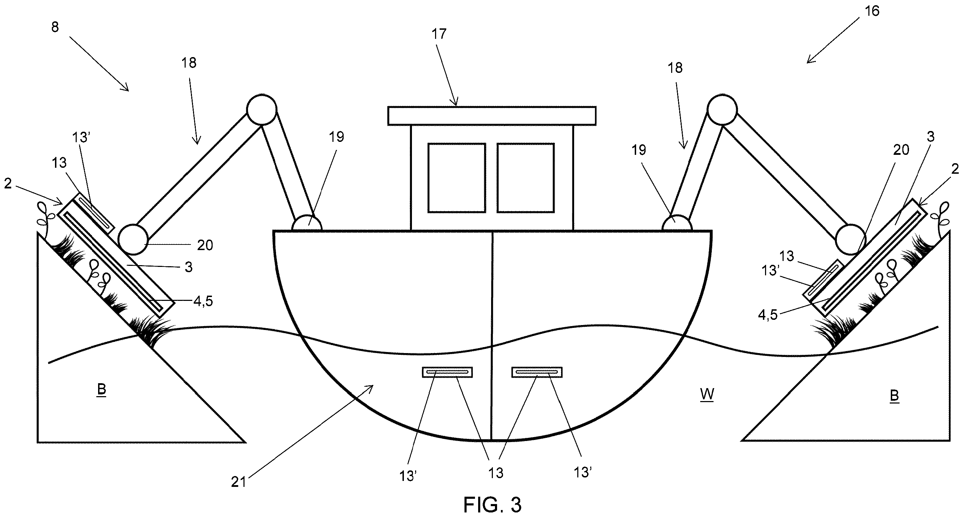

Fig. 1 and Fig. 2 show a mowing bucket 1 as an example of the mowing arrangement of the first aspect for mowing at least one of banks and beds of watercourses, above and/or below the water surface. The mowing bucket 1 comprises a reciprocating blade set 2 as a mowing module the reciprocating blade set 2 comprising a set of at least two serrated blades that are arranged to move relative to one another. The reciprocating blade set 2 is provided with a blade face 3 parallel to the blades and has a mowing edge 4 for cutting vegetation, such as grass and reed-like vegetation on banks or beds of waterways, such as the waterway W as shown in Figure 3. In this exemplary embodiment, the mowing module is embodied as a reciprocating blade set 2 comprising a plurality of reciprocating blades 5 arranged in a series extending along the blade face 3 and providing the mowing edge 4.

The plurality of reciprocating blades 5 are formed by knives, optionally having serrated edges that are provided on a cutting bar and that are held in place along the blade face 3 by a plurality of holders 6, optionally biased towards the blade face 3, e.g. with a spring, for continuous pressure on the plurality of reciprocating blades 5. The mowing edge 4 may also be formed by a single stationary blade or knife, or other cutting tools. A drive 7 is provided for driving a reciprocating movement along the blade face 3 of the plurality of reciprocating blades 5 (Fig. 2).

The mowing bucket 1 comprises an arm coupling 8 as a guiding module. The arm coupling 8 is arranged to guide the reciprocating blade set 2 in a mowing direction D. The mowing direction D extends substantially parallel to the blade face 3 and is, in this embodiment, provided perpendicularly to the mowing edge 4, here formed by the plurality of reciprocating blades 5. In practice, the mowing direction D may be provided under a variety of angles relative to the mowing edge 4, such as between - 80° and 170°, between -45° and 135°, or between -75° and 105° or any other. The arm coupling 8 comprises a coupling member 9. The coupling member 9 is pivotally couplable to a movable arm of a utility equipment, such as a wheel or crawler excavator or a tractor.

The movable arm may e.g. comprise a boom and a dipper or be a robotic arm, such that the reciprocating blade set 2 may be moved through and/or along the watercourse W. This way, when the reciprocating blade set 2 is coupled to a distal end of the movable arm, the reciprocating blade set 2 is pivotable, i.e. pitch and roll, about the distal end of the movable arm e.g. by means of hydraulic or pneumatic actuators of the utility equipment.

The mowing bucket 1 comprises a concave bucket 10, in particular a mowing bucket. The bucket 10 has a curved wall 11, in this embodiment one-dimensionally curved over an axis of curvature A. In the embodiment shown by Figure 1, the curved wall 11 includes a meshed curved wall 11 with a plurality of spaced bars that are curved over the axis of curvature A.

The curved wall 11 may also be provided with a closed wall, or with a mesh constituted by a plurality of holes, rods, webbing or by any other means. This way, during use, drag acting on the bucket 10 may be reduced relatively easily, while the bucket 10 is arranged for receiving cut vegetation. Furthermore, any vegetation cut by means of the reciprocating blade set is kept within the bucket 10, whereas water is free to leave the bucket 10 through the mesh.

The wall 11 is concave and preferably curved. It is noted that whereas a curved shape having a substantially C- or U-shaped cross section taken along line III-III is preferred, the wall 11 may also be considered being curved when formed by multiple wall parts, either flat or curved, joined together under an angle relative to one another for providing a concave shape to the wall 11 and with that, to the bucket 10.

The reciprocating blade set 2 is provided at an end 12 of the curved wall 11. The cutting face 4 of the reciprocating blade set 2 extends substantially parallel to an axis of curvature A, and the mowing edge 4 faces outwardly from the bucket 10, in particular extending in line with the end 12 of the curved wall 11. The bucket 10 is elongate and has, for example, a length L of 5.5 meters, whereas other lengths may be envisaged as well.

The mowing bucket 1 further comprises four light emitting modules 13 as deterring modules. The light emitting modules 13 are provided on the bucket 10. Two light emitting modules 13 are each provided at opposite extremities 14, 14' of the bucket 10 spaced apart over the axis of curvature A. In particular, the two light emitting modules 13 are provided on outer sides of the bucket 10, which form the opposite extremities 14, 14'. Also, two light emitting modules 13 are each provided at a centre portion 15 of the bucket 10 on opposite sides of the coupling member 9 spaced apart along the axis of curvature A.

In this implementation, the latter two light emitting modules 13 are conveniently disposed on a constructional element of the bucket 10 that strengthens and/or stiffens the construction near the coupling member 9. In this embodiment, each light emitting module 13 is releasably attached, for example bolted or by means of magnets, to the bucket 10. Alternatively, the deterring modules may e.g. be riveted or welded to the bucket 10 or connected in any other way available - or by means of a combination thereof.

Each light emitting module 13 is arranged to emit a signal at least partially directed along the mowing direction D for deterring aquatic animals. To that end, the light emitting module may be provided with a waveguide or collimator to direct a beam of light in a particular direction, preferably diverging from the centre of the bucket 10, in a plane substantially parallel to the blade faces 3. Alternatively or additionally, light sources like surface mounted flat LED crystals may be placed under an angle relative to the cutting edge to provide diverging light signals, diverging relative to the centre of the bucket 10 as discussed above.

The light emitting modules 13 are provided on the bucket 10, such that their signals are emitted at least partially in a direction parallel to the blade face 3 and under an angle relative to the mowing edge 4, away from the bucket 10. In particular, the light emitting modules 13 are arranged to emit their signal at an angle of 35° with respect to the mowing direction D, though any other angle may be envisaged as well, between parallel to the mowing direction to up to ninety degrees. The light emitting modules 13 are connectable to a power supply of the utility equipment. Alternatively, the light emitting modules 13 may e.g. be provided with their own power supply e.g. in the form of a battery pack.

The light emitting module 13 is arranged to emit a pulsed white light signal with a frequency between 1 Hz 30 Hz and an intensity of circa 300 lumen, which forms the signal of the deterring module. White light may be true white light, i.e. having a substantially equal level of intensity for all frequencies. Alternatively or additionally, white light may be provided as a mix of discrete small spectra, which mix is perceived as white light.

Here, the light emitting module 13 includes two light emitting diode (LED) strips 13', but other types of lighting modules are also possible such as incandescent or fluorescent lamps. The LED-strips 13' are in this embodiment arranged to emit the signal in a diverging manner, in particular wherein, during use, the signal is emitted in a substantially horizontal plane e.g. substantially parallel to a bed of the watercourse W. In other embodiments at least one LED, LED lamp or surface mounted LED (SMD) module may be provided.

Additionally or alternatively, a speaker may form or be part of the deterring module, wherein the speaker is arranged to emit an acoustic signal, e.g. an intermittent acoustic signal with a certain audio frequency and intensity. Also, an intensity and/or (intermittent) frequency of the signal emitted by the light emitting module 13 and/or speaker may be adjustable. In yet another embodiment, the deterring module comprises, additionally or alternatively to other options discussed above, like emitting electric signals, either direct current or alternating current.

Fig. 3 shows a mowing vessel 16 as an example of a mowing arrangement according to the second aspect. The mowing vessel 16 comprises a vessel 17 that is configured to move through water, for example powered by an electromotor or combustion engine arranged to drive a screw provided to the vessel 17 such that the screw is at least partially submerged if the vessel 17 is provided in the waterway W. In the embodiment depicted by Figure 3, the vessel 17, such as a boat, barge or ship, is for manoeuvring across and/or along the watercourse W for mowing at least one of banks B and beds (not shown) of watercourse W, both above and under the water surface.

The arm coupling 8 of the mowing vessel 17 comprises two guiding arms 18, each arranged to guide a reciprocating blade set 2 of the mowing vessel 17 for mowing vegetation. In other embodiments, one or more than two arms may be provided. A proximal end 19 of each guiding arm is attached to the vessel 17 and a distal end 20 of each guiding arm 18 povitally carries its own reciprocating blade set 2. Each reciprocating blade set 2 comprises a plurality of reciprocating blades 5 arranged in series extending along the cutting face 4 and providing the mowing edge 4, though other types of mowing constructions may be provided additionally or alternatively.

Each reciprocating blade set 2 is provided with the light emitting module 13 as deterring module. The light emitting modules 13 include at least one LED strip 13'. The at least one LED strip 13' emits a pulsed white light signal with a frequency between 1 Hz and 30 Hz, including these values, and an intensity of circa 300 lumen, which forms the signal of the light emitting module 13. In other embodiments at least one LED, LED lamp, surface mounted LED (SMD) module and/or speaker may be provided. The signal is emitted along the mowing direction D that is directed out of the illustrated drawing. In addition, two light emitting modules 13 are provided on a part 21 of the vessel 17 that is submerged, in particular on a hull of the vessel 17.

The signal is at least partially directed in the direction of movement of the vessel 17, which in this case coincides with the mowing direction D that is directed out of the illustration. In particular, the light emitting modules 13 provided on the part 21 of the vessel 17 that is submerged, emit their signals partially downward with respect to the vessel's direction of movement, such that aquatic animals may be driven forward relative to the direction of travel of the vessel 17.

Additionally or alternatively, the reciprocating blade set 2 may be provided on an underside of the hull of the vessel 17. Further, the mowing bucket 1 of Figs. 1 and 2 may additionally or alternatively be provided on the vessel 17 via a guiding arm 18. In this case, the guiding arm 18 is arranged to guide the mowing bucket 1 for mowing vegetation, in particular in a mowing direction D that is, in practice, substantially transverse to the direction of movement of the vessel 17.

Thus is disclosed a mowing arrangement for mowing at least one of banks and beds of watercourses, comprising a mowing module provided with a cutting face having a cutting edge for cutting vegetation, a guiding module arranged to guide the mowing module in a mowing direction extending substantially parallel to the cutting face and provided under an angle relative to the cutting edge, and a deterring module arranged to emit a signal at least partially directed along the mowing direction for deterring aquatic animals.

Many variations will be apparent to the skilled person in the art. For example, a receiving volume of the bucket may be increased by including extension and/or side racks. For instance, the bucket may be provided with a tilting coupler to allow the bucket to be pivoted lengthwise into a compact construction during transport. The length of the bucket may, without limitation, range for example from 2 to 8 meters. Two buckets may be used simultaneously, e.g. adjacent to each other on the same or separate movable arms of an excavator or tractor. In addition, the mowing bucket may be provided on the vessel, wherein the guiding module comprises a further guiding arm. The light signal emitted by the light emitting module may e.g. be blue, yellow, green or violet. The intensity of the light signal may e.g. range between 100 to 3000 lumen. The frequency of the pulsed light signal may e.g. range between 10 to 500 Hz. Furthermore, the audio frequency of the speaker may e.g. range between 20 to 3000 Hz, the intensity of the acoustic signal emitted by the speaker may e.g. range between 10 to 200 dB, and/or the acoustic signal intermittent frequency may e.g. range between 10 to 200 Hz, though any other value or range suitable for deterring fish, otters or other aquatic animals may be applied as well.

Such variations are understood to be comprised within the scope of the invention defined in the appended claims.

In the description above, it will be understood that when an element such as layer, region or substrate is referred to as being "on" or "onto" another element, the element is either directly on the other element, or intervening elements may also be present. Also, it will be understood that the values given in the description above, are given by way of example and that other values may be possible and/or may be strived for.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

It is to be noted that the figures are only schematic representations of embodiments of the invention that are given by way of non-limiting examples. For the purpose of clarity and a concise description, features are described herein as part of the same or separate embodiments, however, it will be appreciated that the scope of the invention may include embodiments having combinations of all or some of the features described.

The word 'comprising' does not exclude the presence of other features or steps than those listed in a claim. Furthermore, the words 'a' and 'an' shall not be construed as limited to 'only one', but instead are used to mean 'at least one', and do not exclude a plurality.

A person skilled in the art will readily appreciate that various parameters and values thereof disclosed in the description may be modified and that various embodiments disclosed and/or claimed may be combined without departing from the scope of the appended claims. Furthermore, the skilled person will understand that the values named may vary with an appropriate margin, approximately 5%, unless it is clear from the description that an exact value is required.

It is stipulated that the reference signs in the claims do not limit the scope of the claims, but are merely inserted to enhance the legibility of the claims.

## Claims

1. Mowing arrangement for mowing at least one of banks and beds of watercourses, comprising:
- a mowing module provided with a cutting edge for cutting vegetation;
- a guiding module arranged to guide the mowing module in a mowing direction extending under an angle relative to the cutting edge; and
**characterised in that**
the mowing arrangement further
comprises a concave bucket (1) having a curved wall (11), curved over an axis of curvature (A), the bucket (1) being arranged for receiving cut vegetation, wherein the mowing module is provided at an end of the curved wall (11), such that the cutting edge of the mowing module extends substantially parallel to the axis of curvature (A), and faces outwardly from the bucket (1), wherein
- two deterring modules are each provided at opposite extremities of the bucket (1) spaced apart over the axis of curvature (A) and arranged to emit a signal at least partially directed along the mowing direction for deterring aquatic animals
and/or
- the guiding module comprises a coupling member (9) that is pivotally couplable to a movable arm of a utility equipment, such that when the mowing module is coupled to a distal end of the movable arm, the mowing module is pivotable about the distal end of the movable arm,
wherein two deterring modules are each provided at or near a centre portion of the bucket (1) on opposite sides of the coupling member (9) spaced apart along the axis of curvature (A) and arranged to emit a signal at least partially directed along the mowing direction for deterring aquatic animals.

2. Mowing arrangement according to claim 1, wherein the mowing module comprises a plurality of reciprocating blades (5) arranged in a series extending along a cutting face (4) and providing the cutting edge.

3. Mowing arrangement according to any of the claims 1- 2, wherein the deterring modules are provided on the bucket (1), such that the signal is emitted at least partially in a direction parallel to a cutting face (4) comprising the cutting edge of the mowing module and under an angle relative to the cutting edge, away from the bucket (1).

4. Mowing arrangement according to any of the preceding claims, wherein modules are is arranged to emit the signal in a diverging manner, in particular wherein, during use, the signal is emitted in a substantially horizontal plane.

5. Mowing arrangement according to any of the preceding claims, comprising a vessel (17) configured to move the mowing arrangement through water.

6. Mowing arrangement according to claim 5, wherein the guiding module comprises at least one guiding arm (18), wherein a proximal end of the guiding arm (18) is attached to the vessel (17) and a distal end of the guiding arm (18) pivotally carriers the mowing module.

7. Mowing arrangement according to claim 5 or 6, wherein the emitted signal is at least partially directed in an intended direction of movement of the vessel.

8. Mowing arrangement according to claim 7, wherein, in use, the signal emitted by the deterring modules is directed partially downward with respect to the intended direction of movement.

9. Mowing arrangement according to any of the preceding claims, wherein an intensity and/or frequency of the signal emitted by the deterring modules is adjustable.

10. Mowing arrangement according to any of the preceding claims, wherein the deterring modules comprise a light emitting module (13) arranged to emit a light signal, preferably white light, in particular to emit a light signal with an intensity of circa 300 lumen, more in particular to emit pulsed light signals with a frequency of circa 30 Hz.

11. Mowing arrangement according to any of the preceding claims, wherein the deterring modules comprise a speaker arranged to emit an acoustic signal, preferably with an audio frequency of circa 35 Hz, in particular to emit an acoustic signal with an intensity of 50 dB, more in particular to emit intermittent acoustic signals with a frequency of 50 Hz.

## Patentansprüche

1. Mähanordnung zum Mähen von zumindest Gewässer-Ufern oder Sohlen von Gewässern, umfassend:
- ein Mähmodul, das mit einer Schneidkante zum Schneiden von Vegetation versehen ist;
- ein Führungsmodul, das so angeordnet ist, dass es das Mähmodul in einer Mährichtung führt, die sich unter einem Winkel relativ zu der Schneidkante erstreckt; und
**dadurch gekennzeichnet, dass**
die Mähanordnung ferner eine konkave Schaufel (1) mit einer gekrümmten Wand (11) umfasst, die über eine Krümmungsachse (A) gekrümmt ist, wobei die Schaufel (1) zur Aufnahme von geschnittener Vegetation angeordnet ist, wobei das Mähmodul an einem Ende der gekrümmten Wand (11) vorgesehen ist, so dass sich die Schneidkante des Mähmoduls im Wesentlichen parallel zu der Krümmungsachse (A) erstreckt, und von der Schaufel (1) nach außen weist, wobei
- zwei Abschreckungs-Module jeweils an gegenüberliegenden Enden der Schaufel (1) vorgesehen sind, die über die Krümmungsachse (A) voneinander beabstandet sind und so angeordnet sind, dass sie ein Signal aussenden, das zum Abschrecken von Wassertieren zumindest teilweise entlang der Mährichtung gerichtet ist
und/oder
- wobei das Führungsmodul ein Kopplungselement (9) umfasst, das schwenkbar an einen beweglichen Arm eines Nutzgeräts gekoppelt werden kann, so dass, wenn das Mähmodul an ein distales Ende des beweglichen Arms gekoppelt ist, das Mähmodul um das distale Ende des beweglichen Arms schwenkbar ist,
wobei zwei Abschreckungs-Module jeweils an oder in der Nähe eines mittleren Abschnitts der Schaufel (1) auf gegenüberliegenden Seiten des Kopplungselements (9) vorgesehen sind, die entlang der Krümmungsachse (A) beabstandet und so angeordnet sind, dass sie ein Signal aussenden, das zum Abschrecken von Wassertieren zumindest teilweise entlang der Mährichtung gerichtet ist.

2. Mähanordnung nach Anspruch 1, wobei das Mähmodul eine Vielzahl von sich hin- und herbewegenden Klingen (5) umfasst, die in einer Reihe angeordnet sind und sich entlang einer Schneidfläche (4) erstrecken und die Schneidkante bilden.

3. Mähanordnung nach einem der Ansprüche 1 bis 2, wobei die Abschreckungs-Module auf der Schaufel (1) vorgesehen sind, so dass das Signal zumindest teilweise in einer Richtung parallel zu einer Schneidfläche (4), die die Schneidkante des Mähmoduls umfasst, und unter einem Winkel relativ zur Schneidkante von der Schaufel (1) ausgesendet wird.

4. Mähanordnung nach einem der vorhergehenden Ansprüche, wobei die Module so angeordnet sind, dass sie das Signal in einer divergierenden Weise aussenden, insbesondere wobei das Signal während des Gebrauchs in einer im Wesentlichen horizontalen Ebene ausgesendet wird.

5. Mähanordnung nach einem der vorhergehenden Ansprüche, umfassend ein Wasserfahrzeug (17), das zum Bewegen der Mähanordnung über Wasser eingerichtet ist.

6. Mähanordnung nach Anspruch 5, wobei das Führungsmodul mindestens einen Führungsarm (18) umfasst, wobei ein proximales Ende des Führungsarms (18) an dem Wasserfahrzeug (17) befestigt ist und ein distales Ende des Führungsarms (18) das Mähmodul schwenkbar trägt.

7. Mähanordnung nach Anspruch 5 oder 6, wobei das ausgesandte Signal zumindest teilweise in eine beabsichtigte Bewegungsrichtung des Wasserfahrzeugs gerichtet ist.

8. Mähanordnung nach Anspruch 7, wobei, im Gebrauch, das von den Abschreckungs-Modulen ausgesandte Signal teilweise nach unten in Bezug auf die beabsichtigte Bewegungsrichtung gerichtet ist.

9. Mähanordnung nach einem der vorhergehenden Ansprüche, wobei die Intensität und/oder die Frequenz des von den Abschreckungs-Modulen ausgesandten Signals einstellbar ist.

10. Mähanordnung nach einem der vorhergehenden Ansprüche, wobei die Abschreckungs-Module ein lichtemittierendes Modul (13) umfassen, das so eingerichtet ist, ein Lichtsignal, vorzugsweise weißes Licht, auszusenden, insbesondere ein Lichtsignal mit einer Intensität von ca. 300 Lumen auszusenden, weiter vorzugsweise gepulste Lichtsignale mit einer Frequenz von ca. 30 Hz auszusenden.

11. Mähanordnung nach einem der vorhergehenden Ansprüche, wobei die Abschreckungs-Module einen Lautsprecher umfassen, der eingerichtet ist, ein akustisches Signal, vorzugsweise mit einer Tonfrequenz von etwa 35 Hz, auszusenden, insbesondere ein akustisches Signal mit einer Intensität von 50 dB auszusenden, weiter vorzugsweise intermittierende akustische Signale mit einer Frequenz von 50 Hz auszusenden.

## Revendications

1. Dispositif de fauche pour le fauche d'au moins une rive et d'un lit de cours d'eau, comprenant
- un module de fauche muni d'un bord tranchant pour couper la végétation ;
- un module de guidage conçu pour guider le module de fauche dans une direction de fauche s'étendant sous un angle par rapport à l'arête de coupe ; et
**caractérisé en ce que**
le dispositif de fauche comprend en outre un godet concave (1) ayant une paroi incurvée (11), incurvée sur un axe de courbure (A), le godet (1) étant conçu pour recevoir la végétation coupée, dans lequel le module de fauche est prévu à une extrémité de la paroi incurvée (11), de telle sorte que le bord tranchant du module de fauche s'étende sensiblement parallèlement à l'axe de courbure (A) et soit orienté vers l'extérieur du godet (1), dans lequel
- deux modules de dissuasion sont placés chacun aux extrémités opposées du godet (1), espacés sur l'axe de courbure (A) et disposés de manière à émettre un signal au moins partiellement dirigé le long de la direction de fauche pour dissuader les animaux aquatiques
et/ou
le module de guidage comprend un élément de couplage (9) qui peut être couplé de manière pivotante à un bras mobile d'un équipement utilitaire, de sorte que lorsque le module de fauche est couplé à une extrémité distale du bras mobile, le module de fauche peut pivoter autour de l'extrémité distale du bras mobile,
dans lequel deux modules de dissuasion sont prévus chacun dans ou près d'une partie centrale du godet (1) sur les côtés opposés de l'élément de couplage (9) espacés le long de l'axe de courbure (A) et agencés pour émettre un signal au moins partiellement dirigé le long de la direction de fauche pour dissuader les animaux aquatiques.

2. Dispositif de fauche selon la revendication 1, dans lequel le module de fauche comprend une pluralité de lames (5) alternatives disposées en série le long d'une face de coupe (4) et fournissant le bord de coupe.

3. Dispositif de fauche selon l'une quelconque des revendications 1 à 2, dans lequel les modules de dissuasion sont placés sur le godet (1), de sorte que le signal est émis au moins partiellement dans une direction parallèle à une face de coupe (4) comprenant l'arête de coupe du module de fauche et sous un angle par rapport à l'arête de coupe, à l'opposé du godet (1).

4. Dispositif de fauche selon l'une quelconque des revendications précédentes, dans lequel les modules sont agencés pour émettre le signal de manière divergente, en particulier dans lequel, en cours d'utilisation, le signal est émis dans un plan sensiblement horizontal.

5. Dispositif de fauche selon l'une quelconque des revendications précédentes, comprenant un bateau (17) configuré pour déplacer le dispositif de fauche sur l'eau.

6. Dispositif de fauche selon la revendication 5, dans lequel le module de guidage comprend au moins un bras de guidage (18), dans lequel une extrémité proximale du bras de guidage (18) est fixée au bateau (17) et une extrémité distale du bras de guidage (18) porte de manière pivotante le module de fauche.

7. Dispositif de fauche selon la revendication 5 ou 6, dans lequel le signal émis est au moins partiellement dirigé dans une direction de mouvement prévue du navire.

8. Dispositif de fauche selon la revendication 7, dans lequel, lors de l'utilisation, le signal émis par les modules de dissuasion est partiellement dirigé vers le bas par rapport à la direction de mouvement prévue.

9. Dispositif de fauche selon l'une quelconque des revendications précédentes, dans lequel l'intensité et/ou la fréquence du signal émis par les modules de dissuasion est réglable.

10. Dispositif de fauche selon l'une quelconque des revendications précédentes, dans lequel les modules de dissuasion comprennent un module d'émission de lumière (13) conçu pour émettre un signal lumineux, de préférence de la lumière blanche, en particulier pour émettre un signal lumineux d'une intensité d'environ 300 lumens, plus particulièrement pour émettre des signaux lumineux pulsés d'une fréquence d'environ 30 Hz.

11. Dispositif de fauche selon l'une des revendications précédentes, dans lequel les modules de dissuasion comprennent un haut-parleur conçu pour émettre un signal acoustique, de préférence avec une fréquence audio d'environ 35 Hz, en particulier pour émettre un signal acoustique d'une intensité de 50 dB, plus particulièrement pour émettre des signaux acoustiques intermittents avec une fréquence de 50 Hz.
